# EUROPEAN PATENT SPECIFICATION

(11) **EP 3 530 388 B1**
(45) Date of publication and mention of the grant of the patent: **16.11.2022**
(21) Application number: 18157767.7
(22) Date of filing: 21.02.2018
(51) Int. Cl.: B23B 27/16, B23B 27/06

(54) **TOOL SYSTEM**
WERKZEUGSYSTEM
SYSTÈME D'OUTIL

(43) Date of publication of application: 28.08.2019
(73) Proprietor: Ceratizit Luxembourg Sàrl, 8232 Mamer (LU)
(72) Inventor: Arjona, Sylvain, 8232 Mamer (LU); Axer, Fabien, 8232 Mamer (LU); Noel, Marc, 8232 Mamer (LU)
(74) Representative: Ciesla, Dirk

(56) References cited:
- WO-A1-2008/062825
- JP-A- 2001 310 204
- JP-U- S4 921 284
- JP-U- S5 969 801
- US-A- 4 123 194
- US-A1- 2013 216 320
- US-A1- 2016 016 233

## Description

The present invention relates to a tool system comprising as per the preamble of claim 1. An example of such a tool system is disclosed by JP S49 21284 U.

In the technical field of machining of in particular metallic materials it is known to use tool systems in which the cutting edge coming into contact with the material to be machined is made from a very hard and wear-resistant material, such as e.g. cemented carbide (often also called hardmetal), cermet or an ultrahard cutting material such as PCD (polycrystalline diamond), CVD diamond, CBN (cubic boron nitride) or cutting ceramics, whereas a main part of the tool which does not come into direct contact with the material to be machined is made from a less hard, tougher material, such as tool steel or the like. In such applications, often the cutting edge is provided on an exchangeable cutting insert made from the hard and wear-resistant material which is held in an insert seat on a holder being made from the tougher material. Depending on the specific intended application there exist different ways for fixation of the exchangeable cutting insert in the insert seat. One common way is the fixation by a fastening screw which extends through a corresponding through-hole in the cutting insert. Another possibility is fixation by means of a clamping system having a clamp acting on an upper surface of the exchangeable cutting insert.

DE 29 36 869 A1 describes a clamping system for fixation of exchangeable cutting inserts in an insert seat of a holder. However, in the described clamping system the load distribution on the hard material of the exchangeable cutting insert is disadvantageous and a frustoconical groove in the upper surface of the cutting insert must be kept within tight tolerances in order to achieve the intended clamping against two lateral seat surfaces.

It is an object of the present invention to provide an improved tool system and an improved use of a cutting insert in such a tool system which achieve reliable and secure clamping even in case of considerable tolerances in the geometry of the exchangeable cutting insert.

This object is solved by a tool system according to claim 1. Further developments are defined in the dependent claims.

Due to the elongated clamping groove of the cutting insert and the two clamping protrusions of the clamp, the load distribution on the cutting insert is very balanced. Interaction of the supporting element (which is preferably exactly one such supporting element) and of the guide surface guiding this supporting element enables secure clamping against the first and second lateral seat surfaces even if the position and orientation of the elongated clamping groove varies due to tolerances resulting from production. Therefore, for example elaborate grinding of the upper surface of the exchangeable cutting insert can be omitted and, e.g. in the case of a cutting insert made from cemented carbide or cermet, the upper surface of the cutting insert can be left in an as-sintered condition of a powder metallurgy production process, which is particularly advantageous from a cost perspective.

The supporting element has a protruding portion having an outwardly convex curved shape. Such a shape enables a lateral tilting of the clamp about the axis defined by the backwards direction along which the clamping force towards the first and second lateral seat surfaces acts and thus can reliably compensate for height tolerances of the cutting insert and of the elongated clamping groove in the direction of extension of the elongated clamping groove. Since the protruding portion of the supporting element has a shape of a segment of a sphere, particularly reliable interaction with the guide surface even in a laterally tilted condition is enabled.

The guide surface has a concavely curved shape. Thus, the clamp can be guided very reliably by interaction of the supporting element with the guide surface. Preferably, the guide surface is concavely curved at least in a lateral direction with respect to the backwards direction.

According to a further development, the guide surface has a shape of a segment of a hollow cylinder. It must be noted that a hollow cylinder can have a circular cross-section but does not necessarily need to have a circular cross-section. A non-circular cross-section is also possible. Preferably, in top view onto the base seat surface of the insert seat a cylinder axis of the hollow cylinder extends substantially perpendicular to the direction of extension of the elongated clamping groove.

According to a further development the guide surface is inclined away from the insert seat. In this case, a clamping force towards the first and second lateral seat surfaces can particularly reliably be exerted by tightening the clamp with the fastening screw.

According to a further development, in top view, the clamping protrusions and the supporting element span a triangle in which a center of the through-hole is situated. In this case, the tightening force applied by the fastening screw is particularly advantageously distributed and the cutting insert is securely clamped against the base seat surface and the first and second lateral seat surfaces.

According to a further development the supporting element and the guide surface are formed to allow lateral tilting of the clamp. In this case, tolerances resulting from production can particularly reliably be compensated for. The lateral direction extends perpendicular to the backwards direction in which the cutting insert is clamped against the first and second lateral seat surfaces.

According to a further development the exchangeable cutting insert is a thread-forming cutting insert having a cutting edge with a plurality of teeth formed at an intersection between the upper surface and a front surface of the cutting insert. In this application, in which the cutting forces are strongly distributed in the lateral direction on the cutting edge, the present clamping mechanism is particularly advantageous. The present tool system and its clamping mechanism is particularly advantageous in the technical field of thread-forming cutting inserts (thread chasers) for the gas and oil field industry.

According to a further development, the elongated clamping groove extends obliquely to a main extension of the cutting edge. In this case, the clamping force can reliably be applied in a direction having both a component in a direction perpendicular to the main extension of the cutting edge and a component in a direction parallel to the main extension of the cutting edge. This is particularly advantageous in applications where the cutting forces act both perpendicular to the cutting edge and along the cutting edge, such as in case of thread-forming cutting inserts having a plurality of teeth.

The object is also solved by use of a cutting insert in such a tool system as defined in claim 7. The cutting insert has an upper surface, a lower side and at least a first lateral side and a second lateral side. In the upper surface the cutting insert has an elongated clamping groove extending obliquely to both the first lateral side and the second lateral side. This use achieves the advantages which are described above for the tool system.

Further advantages and further developments of the invention will become apparent from the following description of embodiments with reference to the enclosed drawings.

In the figures:
- Fig. 1:: is a schematic, perspective exploded illustration of a tool system according to an embodiment;
- Fig. 2:: is a schematic, perspective sectional illustration of the tool system;
- Fig. 3:: is a schematic side view of the tool system;
- Fig. 4:: is a schematic sectional view of the tool system;
- Fig. 5:: is a schematic top view of the tool system without the clamp;
- Fig. 6:: is a schematic perspective illustration of the holder of the tool system without the cutting insert and without the clamp;
- Fig. 7:: is a schematic top view of the cutting insert;
- Fig. 8:: is a schematic first side view of the cutting insert;
- Fig. 9:: is a schematic second side view of the opposite side of the cutting insert;
- Fig. 10:: is a schematic illustration of the clamp from below; and
- Fig. 11:: is a schematic perspective illustration of the underside of the clamp.

An embodiment of the tool system 1 will now be described with reference to the Figures.

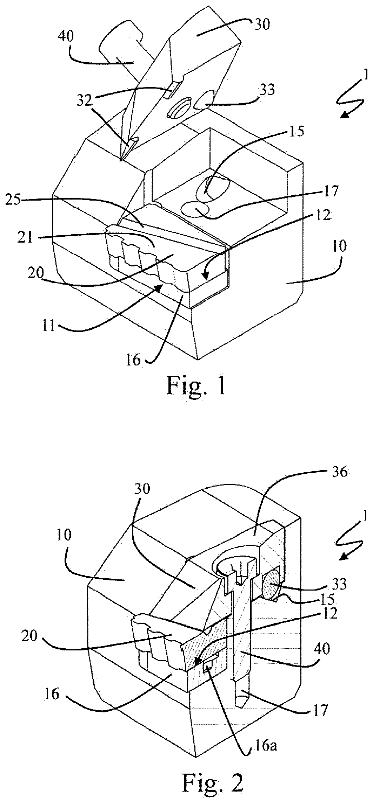

As can be seen in Fig. 1, the tool system 1 according to the embodiment comprises a holder 10 having an insert seat 11 for holding an exchangeable cutting insert 20. Although the holder 10 shown as an embodiment is formed as a cartridge to be mounted in a cartridge carrier to be connected to a metal-cutting machine, the holder 10 does not necessarily have to be formed as such a cartridge, but could for instance also be formed as a holder which is adapted to be directly connected to the metal-cutting machine. The holder 10 can in particular be formed from a tool steel or the like.

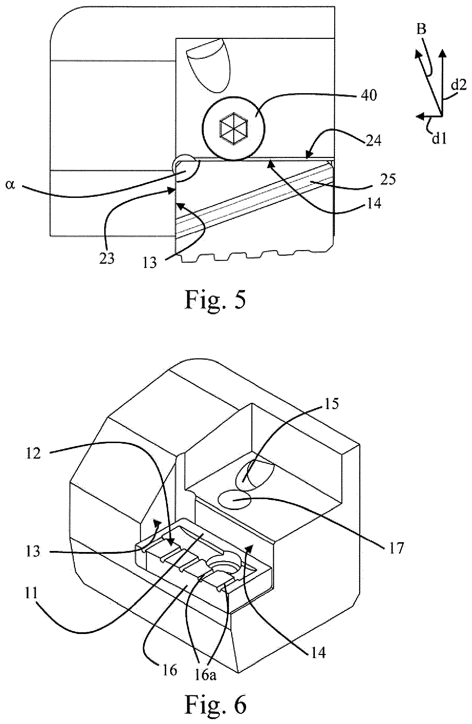

As can be seen in Fig. 6, the insert seat 11 has a base seat surface 12 for supporting a lower side of the cutting insert 20, a first lateral seat surface 13 for supporting a first lateral side of the cutting insert 20 and a second lateral seat surface 14 for supporting a second lateral side of the cutting insert 20. In the specific embodiment shown in the Figures, the base seat surface 12 is provided by a shim plate 16 having a structure with a plurality of coolant grooves 16a for supplying coolant close to the region of a cutting edge 26 of the cutting insert 20. In the specific embodiment, the coolant grooves 16a communicate with a coolant supply via a through-hole formed in the base seat surface 12 and the coolant is supplied to a front surface 27 of the cutting insert 20 through the coolant grooves 16a, i.e. between the lower side 22 of the cutting insert 20 and the base seat surface 12 of the insert seat 11, such that coolant is supplied to the clearance surface of the cutting insert 20. Although a realization is shown in the Figures in which the base seat surface 12 is provided by the shim plate 16, the base seat surface 12 can also be formed directly in one piece, i.e. monolithically, with the first and second lateral seat surfaces 12, 13. The first lateral seat surface 13 and the second lateral seat surface 14 enclose an internal angle α which is smaller than 180°. Although the internal angle α is roughly 90° in the embodiment shown, as can be seen in Fig. 5, smaller or larger angles are also possible.

As can be seen in Fig. 1, the cutting insert 20 is placed in the insert seat 11 such that its lower side 22 rests against the base seat surface 12, its first lateral side 23 rests against the first lateral seat surface 13, and its second lateral side 24 rests against the second lateral seat surface 14.

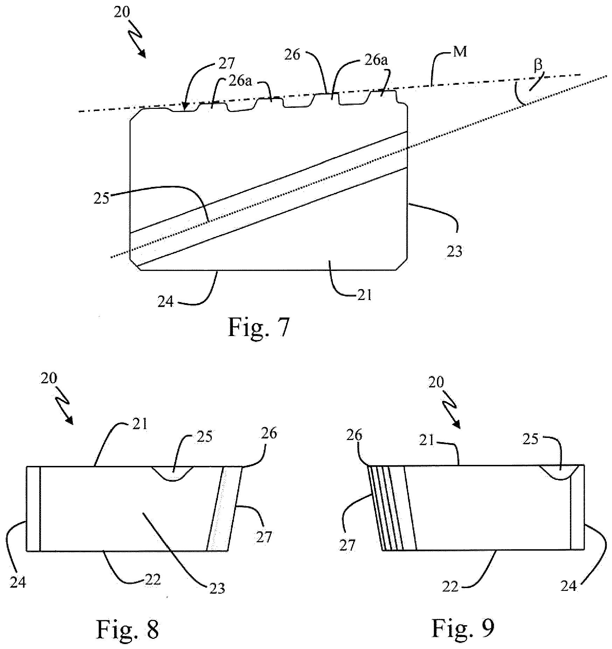

Next, the cutting insert 20 according to the embodiment will be described more in detail with reference to Fig. 7, Fig. 8 and Fig. 9.

In the specific realization shown in the Figures, the cutting insert 20 is formed as a thread-forming cutting insert for machining a thread structure into the surface of a tube or rod. The cutting insert 20 has an upper surface 21 opposite to the lower side 22 and a front surface 27 opposite to the second lateral side 24. A cutting edge 26 is formed at an intersection between the upper surface 21 and the front surface 27 such that in cutting operation the upper surface 21 serves as a chip surface and the front surface 27 serves as a clearance surface. The cutting edge 26 has a plurality of independent teeth 26a which are arranged consecutively along the cutting edge 26 for machining a thread shape into a work-piece to be machined. In the specific embodiment, the cutting teeth 26a have different shapes for machining the thread step by step, as is well known in the art. As can be seen in Fig. 7, the cutting edge 26 has a main extension M.

An elongated clamping groove 25 is formed in the upper surface 21 of the cutting insert 20, as can be seen in Fig. 7 for instance. In the embodiment shown, the elongated clamping groove 25 extends from the first lateral side 23 to the opposite side of the cutting insert 20. The clamping groove 25 extends obliquely to both the first lateral side 23 and the second lateral side 24 of the cutting insert 20 such that, in the mounted state, the clamping groove 25 extends obliquely to the first lateral seat surface 13 and to the second lateral seat surface 14. As can be seen in Fig. 7 for example, the elongated clamping groove 25 extends obliquely to a main extension M of the cutting edge 26. In other words, the clamping groove 25 extends under an angle β to the main extension M of the cutting edge.

Returning now to Fig. 1 and Fig. 2, it can be seen that the cutting insert 20 is fastened to the insert seat 11 by means of a clamping mechanism comprising a clamp 30 acting on the upper surface 21 of the cutting insert and a fastening screw 40 for tightening the clamp 30. The fastening screw 40 has a threaded shank portion for cooperating with a threaded bore 17 provided in the holder 11 and a head portion for acting on the clamp 30.

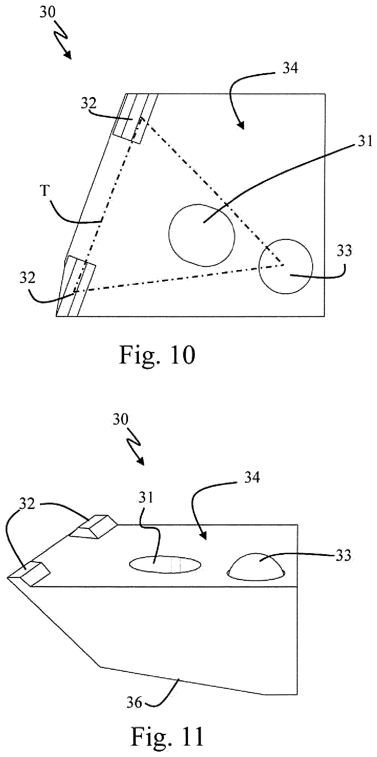

The clamp 30 will be described more in detail in the following with reference to Fig. 10 and Fig. 11. As can be seen in the Figures, the clamp 30 has through-hole 31 extending through the material of the clamp 30 from an upper side 36 to a lower side 34. A recess for receiving the head of the fastening screw 40 is formed in the upper side 36 of the clamp 30, as can be seen in Fig. 2. As schematically shown in Fig. 10 and Fig. 11, the through-hole 31 has an oblong shape such that the clamp 30 can move in a plane perpendicular to the shank axis of the fastening screw 40 when the shank of the fastening screw 40 is in a state in which it is passed through the through-hole 31. The lower side 34 of the clamp 30 is provided with two clamping protrusions 32 which are adapted to cooperate in a form-locking manner with the elongated clamping groove 25 in the cutting insert 20. The clamping protrusions 32 have a shape adapted to the shape of the clamping groove 25 such that a force directed towards the first lateral seat surface 13 and towards the second lateral seat surface 14 is applied to the cutting insert 20 when the clamp 30 becomes fastened by means of the fastening screw 40. As can be seen in Fig. 10 and Fig. 11, the clamping protrusions 32 are located on one side of the through-hole 31 and protrude downwards from the lower side 34 of the clamp 30. The clamping protrusions 32 are laterally spaced from each other with respect to a lateral direction of the clamp 30.

At the other side of the through-hole 31, a supporting element 33 is provided. In the embodiment shown, the supporting element 33 protrudes downward from the lower side 34 of the clamp 30. A protruding portion of the supporting element 33 has an outwardly convex shape, as can be seen in Fig. 11. In the specific embodiment shown, the protruding portion of the supporting element 33 has a shape of a segment of a sphere. In the specific realization shown in the Figures, the supporting element 33 is formed by a ball press-fitted into a corresponding recess in the lower side 34 of the clamp 30, as can be seen in Fig. 2 for example. It should be noted, however, that other realizations of the supporting element 33 are also possible. In particular, the supporting element 33 can for instance also be formed in one piece, i.e. monolithic, with the rest of the clamp 30. As schematically indicated by a dash-dotted line in Fig. 10, the supporting element 33 and the clamping protrusions 32 span a triangle T. A center of the through-hole 31 is located within the boundaries of this triangle T, as can be seen in Fig. 10.

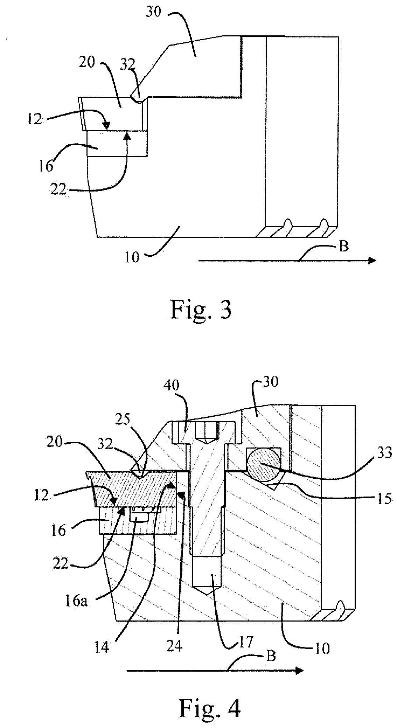

Returning now to Fig. 1, Fig. 2 and Fig. 4, it can be seen that a guide surface 15 is formed in the holder 10. The guide surface 15 is adapted to cooperate with the supporting element 33 in such a manner that, in a mounted state, the supporting element 33 and thus the clamp 30 is guided in a backwards direction B away from the cutting insert 20 when the fastening screw 40 is fastened, as will be explained more in detail below. The guide surface 15 has a concavely curved shape with the curvature formed substantially in a direction parallel to the direction of extension of the elongated clamping groove 25 which is formed in the cutting insert 20. As can be seen in Fig. 4, the guide surface 15 is inclined away from the insert seat 11 such that the supporting element 33 is guided in the backwards direction B when the fastening screw 40 becomes tightened. In the specific realization shown in the Figures, the guide surface 15 is formed by an obliquely machined recess in the holder and thus has a shape of a segment of a hollow cylinder. Besides the fact that such a shape can particularly easily be formed, the interaction of such a shape with the protruding supporting element 33 achieves particularly stable guiding in the backwards direction B.

Functioning of the tool system 1 will now be described with reference to Figs. 1, 2, 4 and 5. For assembly of the tool system 1, the exchangeable cutting insert 20 is placed in the insert seat 11, as can be seen in Fig. 1. Then, the clamp 30 is mounted such that the clamping protrusions 32 engage the elongated clamping groove 25 at laterally spaced positions and such that the supporting element 33 is received in the recess in the holder 10 comprising the guide surface 15. Due to the described realization of the supporting element 33 and of the corresponding guide surface 15, the clamp 30 is enabled to lateral tilting. This ability to perform lateral tilting (lateral with respect to the backwards direction (B)) allows compensating for tolerances of the cutting insert 20 and/or of the elongated clamping groove 25 in the thickness direction. Due to the described construction, the clamp 30 can also rotate to a certain extent around an axis parallel to the axis of the fastening screw 40 in order to compensate for tolerances in this direction.

When the fastening screw 40 is tightened for clamping the cutting insert 20 in the insert seat 11, the head of the fastening screw 40 acts on the clamp 30, urging it in the direction towards the base seat surface 12. Interaction of the supporting element 33 with the guide surface 15 pulls the clamp 30 in the backwards direction B. The clamping protrusions 32 of the clamp 30 act on the inclined back side of the elongated clamping groove 25 such that the cutting insert 20 is urged downwards against the base seat surface 12 and in the backwards direction B against the first lateral seat surface 13 and against the second lateral seat surface 14. As schematically shown in Fig. 5, the backwards direction B has a directional component d1 which is normal to the first lateral seat surface 13 and a directional component d2 which is normal to the second lateral seat surface 14. In this way, the cutting insert 20 becomes securely clamped even if the cutting insert 20 or the elongated clamping groove 25 has increased tolerances.

## Claims

1. A tool system (1) comprising:
a holder (10) having an insert seat (11) for holding an exchangeable cutting insert (20), the insert seat (11) having a base seat surface (12) for supporting a lower side (22) of the cutting insert (20), a first lateral seat surface (13) for supporting a first lateral side (23) of the cutting insert (20), and a second lateral seat surface (14) for supporting a second lateral side (24) of the cutting insert (20), the first and second lateral seat surfaces (23, 24) enclosing an internal angle (α) smaller than 180°, and
an exchangeable cutting insert (20) mounted in the holder (10) via a clamping mechanism,
the clamping mechanism comprising a clamp (30) acting on an upper surface (21) of the cutting insert (20) and a fastening screw (40) for tightening the clamp (30),
wherein the upper surface (21) of the cutting insert (20) has an elongated clamping groove (25),
wherein the clamp (30) has a through-hole (31) for receiving the fastening screw (40), at one side of the through-hole (31) has two clamping protrusions (32) engaging the clamping groove (25) of the cutting insert (20) at positions spaced from each other, and at the other side of the through-hole (31) comprises a supporting element (33),
wherein the holder (10) has a guide surface (15) guiding the supporting element (33) in a backwards direction (B) away from the cutting insert (20) upon tightening the fastening screw (40),
wherein the guide surface (15) has a concavely curved shape,
**characterized in that**
the elongated clamping groove (25) extends obliquely to both the first lateral seat surface (13) and the second lateral seat surface (14),
the backwards direction (B) has at least a directional component (d1) normal to the first lateral seat surface (13) and a directional component (d2) normal to the second lateral seat surface (14), and
the supporting element (33) has a protruding portion having a shape of a segment of a sphere.

2. The tool system according to claim 1, wherein the guide surface (15) has a shape of a segment of a hollow cylinder.

3. The tool system according to any one of the preceding claims, wherein the guide surface (15) is inclined away from the insert seat (11).

4. The tool system according to any one of the preceding claims, wherein, in top view, the clamping protrusions (32) and the supporting element (33) span a triangle (T) in which a center of the through-hole (31) is situated.

5. The tool system according to any one of the preceding claims, wherein the exchangeable cutting insert (20) is a thread-forming cutting insert having a cutting edge (26) with a plurality of teeth (26a) formed at an intersection between the upper surface (21) and a front surface (27) of the cutting insert (20).

6. The tool system according to claim 5, wherein the elongated clamping groove (25) extends obliquely to a main extension (M) of the cutting edge (26).

7. Use of a cutting insert (20) having an upper surface (21), a lower side (22) and at least a first lateral side (23) and a second lateral side (24) in a tool system (1) according to any one of the preceding claims, the cutting insert (20) having in the upper surface (21) an elongated clamping groove (25) extending obliquely to both the first lateral side (23) and the second lateral side (24).

## Patentansprüche

1. Werkzeugsystem (1), aufweisend:
einen Halter (10) mit einem Einsatzsitz (11) zum Halten eines austauschbaren Schneideinsatzes (20), wobei der Einsatzsitz (11) eine untere Sitzfläche (12) zum Stützen einer unteren Seite (22) des Schneideinsatzes (20), eine erste laterale Sitzfläche (13) zum Stützen einer ersten lateralen Seite (23) des Schneideinsatzes (20) und eine zweite laterale Sitzfläche (14) zum Stützen einer zweiten lateralen Seite (24) des Schneideinsatzes (20) hat, wobei die erste und die zweite laterale Sitzfläche (23, 24) einen inneren Winkel (α) einschließen, der kleiner als 180° ist, und
einen austauschbaren Schneideinsatz (20), der über einen Klemmmechanismus in dem Halter (10) montiert ist,
wobei der Klemmmechanismus eine Klemme (30), die auf eine obere Fläche (21) des Schneideinsatzes (20) wirkt, und eine Befestigungsschraube (40) zum Anziehen der Klemme (30) umfasst,
wobei die obere Fläche (21) des Schneideinsatzes (20) eine längliche Klemmnut (25) hat,
wobei die Klemme (30) ein Durchgangsloch (31) zur Aufnahme der Befestigungsschraube (40) hat, an einer Seite des Durchgangslochs (31) zwei Klemmvorsprünge (32) hat, die die Klemmnut (25) des Schneideinsatzes (20) an voneinander beabstandeten Positionen in Eingriff nehmen, und an der anderen Seite des Durchgangslochs (31) ein Stützelement (33) umfasst,
wobei der Halter (10) eine Führungsfläche (15) hat, die das Stützelement (33) bei Anziehen der Befestigungsschraube (40) in einer rückwärtigen Richtung (B) von dem Schneideinsatz (20) weg führt,
wobei die Führungsfläche (15) eine konkav gekrümmte Form hat,
**dadurch gekennzeichnet, dass**
sich die längliche Klemmnut (25) schräg sowohl zu der ersten lateralen Sitzfläche (13) als auch der zweiten lateralen Sitzfläche (14) erstreckt,
die rückwärtige Richtung (B) mindestens eine Richtungskomponente (d1) hat, die orthogonal zu der ersten lateralen Sitzfläche (13) verläuft, und eine Richtungskomponente (d2), die orthogonal zu der zweiten lateralen Sitzfläche (14) verläuft, und
das Stützelement (33) einen vorragenden Abschnitt mit der Form eines Kreissegments hat.

2. Werkzeugsystem (1) nach Anspruch 1, wobei die Führungsfläche (15) die Form eines Segments eines Hohlzylinders hat.

3. Werkzeugsystem (1) nach einem der vorhergehenden Ansprüche, wobei die Führungsfläche (15) von dem Einsatzsitz (11) weg geneigt ist.

4. Werkzeugsystem (1) nach einem der vorhergehenden Ansprüche, wobei die Klemmvorsprünge (32) und das Stützelement (33) von oben gesehen ein Dreieck (T) aufspannen, in dem eine Mitte des Durchgangslochs (31) angeordnet ist.

5. Werkzeugsystem (1) nach einem der vorhergehenden Ansprüche, wobei der austauschbare Schneideinsatz (20) ein gewindeschneidender Schneideinsatz ist, der eine Schneidkante (26) mit einer Mehrzahl von Zähnen (26a) hat, die an einer Schnittlinie zwischen der oberen Fläche (21) und einer vorderen Fläche (27) des Schneideinsatzes (20) ausgebildet sind.

6. Werkzeugsystem (1) nach Anspruch 5, wobei sich die längliche Klemmnut (25) schräg zu einer Haupterstreckung (M) der Schneidkante (26) erstreckt.

7. Verwendung eines Schneideinsatzes (20) mit einer oberen Fläche (21), einer unteren Seite (22) und mindestens einer ersten lateralen Seite (23) und einer zweiten lateralen Seite (24) in einem Werkzeugsystem (1) nach einem der vorhergehenden Ansprüche, wobei der Schneideinsatz (20) in der obere Flächen (21) eine längliche Klemmnut (25) hat, die sich schräg sowohl zu der ersten lateralen Seite (23) als auch der zweiten lateralen Seite (24) erstreckt.

## Revendications

1. Système d'outil (1) comprenant :
un dispositif de maintien (10) comportant un siège pour plaquette (11) servant à maintenir une plaquette de coupe échangeable (20), le siège pour plaquette (11) comportant une surface de siège de base (12) servant à supporter un côté inférieur (22) de la plaquette de coupe (20), une première surface latérale de siège (13) servant à supporter un premier côté latéral (23) de la plaquette de coupe (20) et une seconde surface latérale de siège (14) servant à supporter un second côté latéral (24) de la plaquette de coupe (20), les première et seconde surfaces latérales de siège (23, 24) délimitant un angle intérieur (α) inférieur à 180°, et
une plaquette de coupe échangeable (20) fixée dans le dispositif de maintien (10) par le biais d'un mécanisme de serrage,
le mécanisme de serrage comprenant une pièce de serrage (30) agissant sur une surface supérieure (21) de la plaquette de coupe (20) et une vis de fixation (40) servant à serrer la pièce de serrage (30),
la surface supérieure (21) de la plaquette de coupe (20) comportant une rainure de serrage allongée (25),
la pièce de serrage (30) comportant un trou débouchant (31) destiné à recevoir la vis de fixation (40), comportant, d'un côté du trou débouchant (31), deux protubérances de serrage (32) entrant dans la rainure de serrage (25) de la plaquette de coupe (20) à des emplacements espacés l'un de l'autre, et comprenant, de l'autre côté du trou débouchant (31), un élément de support (33),
le dispositif de maintien (10) comportant une surface de guidage (15) guidant l'élément de support (33) dans une direction vers l'arrière (B) s'éloignant de la plaquette de coupe (20) lors du serrage de la vis de fixation (40),
la surface de guidage (15) présentant une forme à incurvation concave,
**caractérisé en ce que**
la rainure de serrage allongée (25) s'étend obliquement vis-à-vis à la fois de la première surface latérale de siège (13) et de la seconde surface latérale de siège (14),
la direction vers l'arrière (B) a au moins une composante directionnelle (d1) normale à la première surface latérale de siège (13) et une composante directionnelle (d2) normale à la seconde surface latérale de siège (14), et
l'élément de support (33) comporte une partie saillante présentant la forme d'un segment de sphère.

2. Système d'outil selon la revendication 1, dans lequel la surface de guidage (15) présente la forme d'un segment de cylindre creux.

3. Système d'outil selon l'une quelconque des revendications précédentes, dans lequel la surface de guidage (15) est inclinée dans une direction s'éloignant du siège pour plaquette (11).

4. Système d'outil selon l'une quelconque des revendications précédentes, dans lequel, dans une vue de dessus, les protubérances de serrage (32) et l'élément de support (33) définissent un triangle (T) dans lequel est situé un centre du trou débouchant (31).

5. Système d'outil selon l'une quelconque des revendications précédentes, dans lequel la plaquette de coupe échangeable (20) est une plaquette de coupe de filetage comportant une arête (26) avec une pluralité de dents (26a) formées à une intersection entre la surface supérieure (21) et une surface avant (27) de la plaquette de coupe (20).

6. Système d'outil selon la revendication 5, dans lequel la rainure de serrage allongée (25) s'étend obliquement vis-à-vis d'une étendue principale (M) de l'arête (26).

7. Utilisation d'une plaquette de coupe (20) comportant une surface supérieure (21), un côté inférieur (22) et au moins un premier côté latéral (23) et un second côté latéral (24) dans un système d'outil (1) selon l'une quelconque des revendications précédentes, la plaquette de coupe (20) comportant, dans la surface supérieure (21), une rainure de serrage allongée (25) s'étendant obliquement vis-à-vis à la fois du premier côté latéral (23) et du second côté latéral (24).
